# FASCICULE DE BREVET EUROPEEN

(11) **EP 0 705 681 B1**
(45) Date de publication et mention de la délivrance du brevet: **09.06.1999**
(21) Numéro de dépôt: 95402192.9
(22) Date de dépôt: 29.09.1995
(51) Int. Cl.: B29C 65/10

(54) **Machine de thermosoudage**
Heissschweissvorrichtung
Heat-sealing apparatus

(30) Priorité: 07.10.1994 FR 9412011
(43) Date de publication de la demande: 10.04.1996
(73) Titulaire: FORMFIL S.A.R.L., 94170 Le Perreux sur Marne (FR)
(72) Inventeur: Saget, Didier, F-94170 Le Perreux sur Marne (FR); Mongin, Daniel, F-94170 Le Perreux sur Marne (FR)
(74) Mandataire: Derambure, Christian

(56) Documents cités:
- EP-A- 0 557 537
- DE-A- 2 423 748
- DE-B- 1 106 591
- DE-B- 1 192 813
- FR-A- 2 022 746
- FR-A- 2 126 770
- GB-A- 882 740
- GB-A- 1 396 502
- US-A- 2 423 237
- US-A- 2 587 422
- US-A- 3 402 089
- US-A- 3 562 920
- US-A- 3 801 266
- US-A- 4 834 828
- WELDING IN THE WORLD, vol. 30, no. 7 / 08, 1 Juillet 1992 pages 174-181, XP 000293116 'JOINING OF LINING MEMBRANES MADE FROM POLYMERIC MATERIALS (GEOMEMBRANES) IN GEOTECHNICAL AND HYDRAULIC APPLICATION - WELDING, BONDING BY ADHESIVES, VULCANIZING'

## Description

L'invention concerne une machine de thermosoudage comportant une buse formant source de chaleur, par projection d'air chaud, pour thermosouder deux pièces planes.

On connait des buses formant source de chaleur, comportant une base qui est en communication avec un conduit d'amenée d'air chaud, et un bec d'un seul tenant avec la base, qui permet la projection de l'air chaud du conduit suivant une direction souhaitée d'un axe de projection.

De telles buses sont décrites dans les documents suivants : US-1 396 502 ; US-2 587 422 ; DE-1 192 813 ; "Welding in the World", volume 30, n° 7/08, 1er juillet 1992, pages 774 à 981 ; DE-2 423 748 ; et FR-2 022 746.

Dans ces documents, la structure de la buse ne permet pas d'effectuer un chauffage par intermittence des pièces à thermosouder, tout en gardant un niveau de température constant dans la buse.

Le document FR-A-2.126.770 décrit un organe creux pour la protection d'air chaud sur des cartons à souder, et une chambre auxiliaire de maintien à une température de redémarrage instantanné.

Les caractéristiques décrites dans ce document sont mentionnées dans le préambule de la revendication 1.

Le document US-A-2 423 237 décrit une buse comportant un clapet d'inhibition ou "shuntage" sur sa face supérieure, et commandé par un ressort, pour diriger l'air chaud des pièces à thermosouder.

Cette buse ne peut pas être placée entre les pièces à thermosouder tout en évacuant l'air chaud vers une autre direction que celle des pièces à thermosouder.

Dans la pratique, les buses connues ne permettent pas le thermosoudage de produits synthétiques, avec une projection de chaleur précise et bien orientée, et sur des pièces de différentes épaisseurs.

Des documents cités décrivent des machines de thermosoudage comportant :
- une source de chaleur destinée à envoyer de l'air chaud suivant un axe de projection, en un point prédéterminé des pièces à thermosouder ;
- des moyens de pressage des deux pièces l'une contre l'autre, avec la source de chaleur en amont de ces moyens ;
- des moyens d'entraînement et de guidage des pièces suivant un axe et vers la source de chaleur, en regard et distantes l'une de l'autre et de sorte que la source de chaleur vienne entre les deux pièces à thermosouder en regard.

Ces machines ne permettent pas d'effectuer un thermosoudage adapté à différents matériaux utilisés, avec un même dispositif.

En outre, elles ne permettent pas d'effectuer un thermosoudage par intermittence, c'est-à-dire une série de thermosoudages sans que le niveau de température dans la buse soit modifié et nécessite donc un nouveau réglage long qui ne peut s'adapter par exemple à un thermosoudage en série.

En outre, les configurations présentées dans les documents précédemment cités nécessitent un appareillage encombrant, coûteux et le positionnement des deux pièces à thermosouder doit être maintenu précisément dans toute la durée du déplacement de la source de chaleur et du thermosoudage.

On connaît également des machines de thermosoudage utilisant les ultra-sons, ce qui présente un investissement très lourd, et disproportionné dans le cadre du travail de façonnage à plat qui est le cas le plus fréquent d'utilisation dans le domaine du thermosoudage.

L'état de la technique peut également être illustré par les documents US-2 466 735 et US-3 413 175.

L'invention vise donc à pallier les inconvénients précédemment cités.

Elle a pour objet une machine de thermosoudage comprenant une buse formant source de chaleur permettant d'obtenir et de maintenir en continu une température de chauffe pour le thermosoudage adaptée au type de matériau utilisé, et pouvant être positionnée entre les deux pièces à thermosouder. La machine est d'un encombrement réduit et permet à l'utilisateur de sélectionner le type de matériau qu'il utilise, l'épaisseur du matériau qu'il utilise et ainsi d'effectuer un thermosoudage adéquat, par l'intermédiaire d'une commande par intermittence de la buse.

A cet effet, une buse formant source de chaleur, à projection d'air chaud, est destinée à être positionnée entre deux pièces planes à thermosouder placées en regard, et à envoyer de l'air chaud suivant un axe de projection, en un point prédéterminé des pièces à thermosouder, la buse comportant une base qui est en communication avec un conduit d'amenée d'air chaud, et un bec qui est d'un seul tenant avec la base et qui permet la projection d'air chaud reçue du conduit dans une direction souhaitée suivant l'axe de projection. Le bec est apte à être positionné entre les deux pièces à thermosouder et la buse comporte un clapet ménagé sur la face supérieure de la base et dont l'ouverture provoque l'évacuation de l'air chaud dans une direction d'évacuation différente de la direction souhaitée.

L'invention concerne, selon la revendication 1, une machine de thermosoudage à air chaud pour le thermosoudage d'au moins deux pièces planes en un matériau thermousoudable.

La source de chaleur comporte une buse. Un dispositif de commande est destiné à commander par intermittence l'état de chauffe de la source de chaleur en direction des pièces à thermosouder, en fonction d'un signal envoyé par au moins un détecteur de position destiné à détecter le passage des pièces à thermosouder en un point prédéterminé et à transmettre une information correspondante au dispositif de commande, l'ouverture et la fermeture du clapet de la buse étant commandées par le dispositif de commande en fonction de l'information qu'il a reçu du ou des détecteurs de position.

Les autres caractéristiques de l'invention résulteront de la description qui suivra en se référant aux dessins annexés dans lesquels :
- la figure 1 est un schéma général de la machine de thermosoudage selon l'invention,

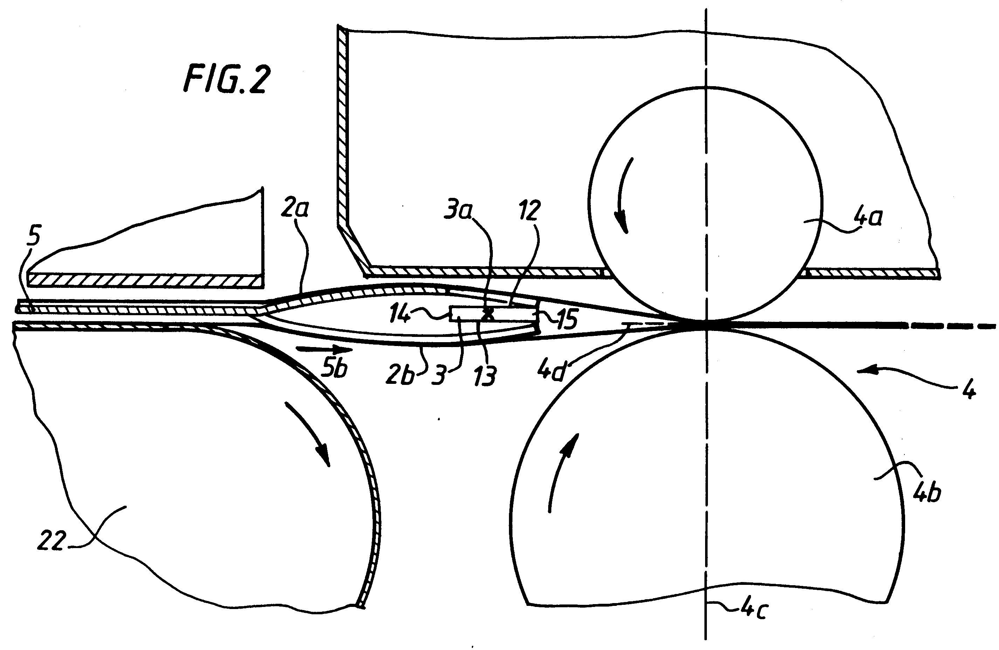

- la figure 2 est une vue agrandie de profil de la partie chauffe et pressage de la machine de thermosoudage de la figure 1,

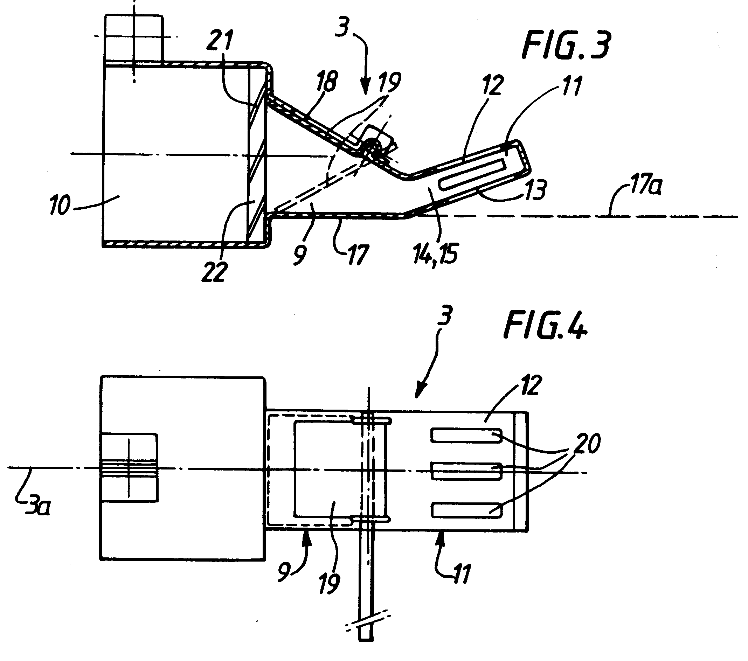

- la figure 3 est une vue de profil d'une buse formant source de chaleur selon l'invention,
- la figure 4 est une vue de dessus de la buse formant source de chaleur représentée sur la figure 3,
- la figure 5 est une vue en perspective de la partie d'extrémité de la buse formant source de chaleur représentée sur les figures 3 et 4, et
- la figure 6 est une vue en perspective schématique d'un mode de réalisation de la buse formant source de chaleur selon l'invention.

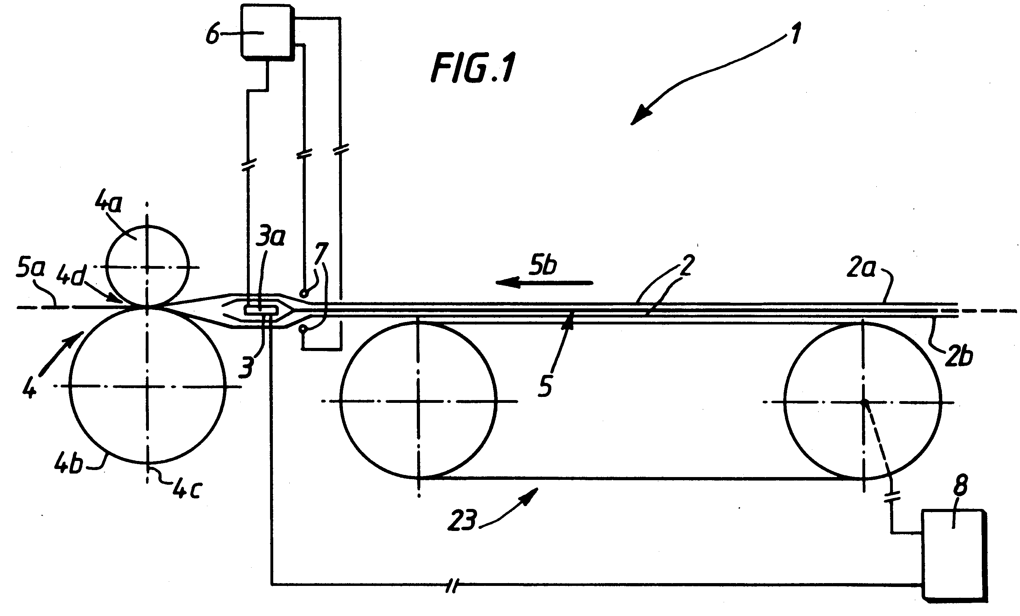

La figure 1 représente une machine de thermosoudage 1 pour le thermosoudage de pièces 2 en un matériau thermosoudable.

Les matériaux utilisés sont du type plastique et plus généralement tout produit synthétique qui peut être collé à chaud.

Dans l'exemple de réalisation représenté, les pièces thermosoudables 2 sont des feuilles supérieure 2a et inférieure 2b. On peut cependant envisager d'autres formes de pièces dès lors que le thermosoudage peut s'effectuer à plat.

La machine de thermosoudage 1 comporte une source de chaleur 3 ayant un axe de projection 3a qui est défini par la direction de projection de l'air chaud, cette source de chaleur 3 étant destinée à envoyer de l'air chaud en un point prédéterminé des pièces à thermosouder.

Des moyens de pressage 4 permettent le pressage des deux feuilles 2a, 2b à thermosouder l'une contre l'autre. Ces moyens de pressage 4 sont de type connu, ils sont notamment constitués de deux rouleaux, à savoir un rouleau supérieur 4a et un rouleau inférieur 4b, entre lesquels passent les deux pièces à thermosouder, qui sont placés suivant un axe 4c sensiblement perpendiculaire à l'axe longitudinal des feuilles 2a et 2b pour créer un axe de pressage 4d défini par la section de contact entre les deux rouleaux. La source de chaleur 3 est placée en amont des moyens de pressage 4.

La machine de thermosoudage 1 comporte en outre des moyens d'entraînement 23 et de guidage 5 permettant l'entraînement et le guidage des feuilles 2a, 2b. Ce guidage s'effectue suivant un axe de guidage 5a parallèle à celui des feuilles et dans un sens de guidage 5b dirigé vers la source de chaleur 3.

Les moyens d'entraînement 23 et de guidage 5 sont de conception connue. Leur assemblage permet le guidage et l'entraînement des feuilles 2a, 2b en regard et distantes l'une de l'autre.

L'axe de guidage 5a est en fait confondu avec l'axe de pressage 4d.

Les feuilles sont guidées sur les moyens de guidage 5 en étant en regard et distantes l'une de l'autre de sorte que lors de leur passage au niveau de la source de chaleur 3, cette dernière soit située entre les deux feuilles 2a et 2b placées en regard.

Ainsi, les feuilles 2a, 2b sont placées sur les moyens de guidage 5 de sorte que leur face intérieure respective soit en regard et distantes l'une de l'autre. Lorsque la machine de thermosoudage 1 est en fonctionnement, les feuilles 2a et 2b sont déplacées dans le sens de guidage 5b en direction de la source de chaleur 3. Au niveau de la source de chaleur 3, les moyens de guidage 5 ont une forme telle que la feuille supérieure 2a passe au-dessus de la source de chaleur 3 et la feuille inférieure 2b passe en-dessous de la source de chaleur 3 de sorte que cette dernière se trouve entre les deux feuilles à thermosouder et plus particulièrement entre les deux faces intérieures de ces feuilles. L'air chaud qu'envoie la source de chaleur 3 permet de chauffer chaque feuille au niveau de sa face intérieure pour qu'elles soient ensuite pressées l'une contre l'autre par les moyens de pressage 4 tout en étant à la température souhaitée afin de pouvoir effectuer ainsi leur thermosoudage.

Pour une meilleure précision de soudage des feuilles, la source de chaleur 3 est montée à proximité des moyens de pressage 4.

Les pièces à thermosouder peuvent être des pièces planes, notamment des feuilles, de différentes épaisseurs. Cette épaisseur peut notamment varier entre 0,3 mm et 2 mm et est de préférence comprise entre 0,5 mm et 1,2 mm.

Afin d'effectuer une projection de chaleur précise et bien orientée, l'axe de projection 3a de la source de chaleur 3 est sensiblement perpendiculaire à l'axe de guidage 5a des moyens de guidage 5.

Selon l'invention et afin de simplifier l'utilisation de la machine de thermosoudage 1, cette dernière est automatisée en fonction de certains critères.

A cet effet la machine de thermosoudage 1 comporte, en outre, un dispositif de commande 6 destiné à commander par intermittence l'état de chauffe de la source de chaleur 3 en direction des pièces 2 à thermosouder. Ce dispositif de commande 6 est informé du passage des pièces à thermosouder par l'intermédiaire d'au moins un détecteur de position 7 placé en amont de la source de chaleur 3 par rapport à l'axe de guidage 5a et destiné à détecter le passage en un point prédéterminé d'au moins une pièce à thermosouder et à transmettre une information correspondante au dispositif de commande 6.

Si l'on utilise un seul détecteur de position 7, seul le passage d'une pièce à thermosouder va être détecté, il est alors indispensable de positionner au départ des moyens de guidage 5, les deux pièces 2a et 2b dans la position précise dans laquelle elles doivent être thermosouder.

Cependant, on peut prévoir plusieurs et notamment deux détecteurs de position 7 associés respectivement à la feuille supérieure 2a et à la feuille inférieure 2b. Cette disposition permet une meilleure précision de commande du dispositif de commande 6 au début du thermosoudage.

Les liaisons entre le ou les détecteur(s) 7 et le dispositif de commande 6 d'une part et entre la source de chaleur 3 et le dispositif de commande 6 d'autre part sont représentées schématiquement. Ce sont notamment des liaisons électriques ou électromécaniques.

Il est également possible de gérer la quantité de chaleur fournie par la source de chaleur 3 et la vitesse d'entraînement des pièces 2a et 2b guidées par les moyens de guidage 5.

A cet effet, la machine de thermosoudage comporte, en outre, un dispositif de gestion 8 relié d'une part aux moyens d'entraînement 23 et d'autre part à la source de chaleur 3 et destiné à déterminer la quantité de chaleur fournie par la source de chaleur 3 et la vitesse d'entraînement des feuilles guidées par les moyens de guidage 5 en fonction de la nature du matériau utilisé pour les pièces 2a, 2b à thermosouder.

La machine à thermosouder peut ainsi s'adapter à différents types de matériaux sans avoir à changer sa configuration.

On peut prévoir, en outre, que le dispositif de gestion 8 soit relié au dispositif de commande 6.

En effet, dans le cas, par exemple, d'un thermosoudage en serie de plusieurs paires de feuilles 2a, 2b, la vitesse d'entrainement des feuilles et l'état de chauffe par intermittence de la source de chaleur 3 peuvent être contrôlés en fonction de la détection effectuée par les détecteurs 7.

En outre, les détecteurs 7 peuvent être positionnés à une certaine distance de la source de chaleur 3 de manière à ne pas chauffer. Dans ce cas, le dispositif de commande 6 comporte des moyens de temporisation (non représentés) permettant de temporiser l'état de chauffe de la source de chaleur 3 non seulement en début de soudure mais également en fin de soudure.

Là encore, les liaisons entre le dispositif de gestion 8 et les moyens d'entraînement 23 et la source de chaleur 3 sont représentées schématiquement et sont notamment de type électriques ou électromécaniques.

Les dispositifs de commande 6 et de gestion 8 sont des dispositifs de type connu et ne nécessitent pas de description plus précise.

S'agissant de la quantité de chaleur fournie, on peut utiliser une source de chaleur propulsée susceptible de fournir une chaleur comprise entre 150 et 600°.

Nous allons maintenant décrire plus en détail la source de chaleur 3 faisant partie de la machine selon l'invention.

La source de chaleur 3 est une buse à projection d'air chaud comportant une base 9 qui est en communication avec un conduit 10 d'amenée d'air chaud, et un bec 11 qui est d'un seul tenant avec la base 9 et qui projette l'air chaud reçu au niveau de la base sur les pièces à thermosouder, dans la direction souhaitée c'est-à-dire sensiblement perpendiculairement à l'axe de guidage 5a.

Pour permettre une chauffe intermittente sans avoir à modifier la température interne de la buse, cette dernière comporte un clapet 19 ménagé sur la face supérieure 18 de la base 9 et dont l'ouverture provoque l'évacuation de l'air chaud dans une direction d'évacuation différente de ladite direction souhaitée. Pour permettre ce changement de direction le clapet s'ouvre vers l'intérieur de la base 9 bloquant ainsi le passage en direction du bec 11 de la buse et provoquant ainsi le changement de direction du jet d'air chaud.

Ainsi l'état de chauffe de la buse correspond en fait à une position fermée du clapet 19 dans laquelle la direction du jet d'air chaud n'est pas modifiée.

Pour assurer une bonne projection de l'air chaud dans la direction adéquate, le bec 11 de la buse 3 a une forme parallélépipédique de section transversale sensiblement rectangulaire. Il est ainsi délimité par une face supérieure 12 dirigée vers la feuille supérieure 2a et une face inférieure 13 dirigée vers la feuille inférieure 2b ainsi que deux faces latérales 14 et 15. Lorsque l'axe 3a de la source de chaleur 3 est sensiblement perpendiculaire à l'axe 5a des moyens de guidage 5, une première face latérale 14 du bec 11 est dirigée vers les moyens de guidage 5 et la deuxième face latérale 15 du bec 11 est dirigée vers les moyens de pressage 4.

La base 9 de la buse 3 présente elle une section droite qui diminue en direction du bec 11 et comporte ainsi une face inférieure 17 définissant un plan 17a incliné par rapport à celui défini par les moyens de guidage 5 et une face supérieure 18 inclinée vers le bas en direction du bec 11.

Afin de ne pas avoir un jet direct de l'air chaud sur les feuilles à thermosouder le bec 11 de la buse 3 est incliné par rapport au plan 17a défini par la face inférieure 17 de la base 9 de tel sorte qu'une fois la buse positionnée, la face inférieure 13 du bec définit un plan parallèle au plan défini par les moyens de guidage.

L'ouverture et la fermeture du clapet 19 sont commandées par l'intermédiaire du dispositif de commande 6 en fonction de l'information qu'il a reçu du ou des détecteur(s) de position 7.

Cette commande se fait notamment de manière électromécanique. Par exemple, tel que cela est représenté à la figure 6, l'ouverture et la fermeture du clapet 19 sont commandées par un électroaimant 6 qui reçoit des informations de positionnement des feuilles 2a et 2b en provenance des détecteurs 7. On peut, en outre, temporiser cette ouverture ou cette fermeture par l'intermédiaire des moyens de temporisation (non représentés).

Pour canaliser l'évacuation d'air chaud, on positionne sur la face superieure 18 de la base 9, une cheminée 24 à disperseur d'air. A son extrémité opposée à la face supérieure 18, la cheminée 24 comporte des déflecteurs de sécurité 25.

L'ouverture et la fermeture du clapet 19 sont commandées par l'électroaimant par l'intermédiaire d'un levier 26.

D'autre part, pour obtenir une meilleure diffusion de l'air chaud en direction des pièces à thermosouder, la buse 3 comporte des perforations 20 ménagées sur au moins une face 12, 13 ou 15 du bec 11 de la buse. En fait, la diffusion de l'air chaud doit s'effectuer verticalement en direction de la feuille supérieure 2a et en direction de la feuille inférieure 2b et horizontalement en direction des moyens de pressage 4.

Il n'est pas utile de diffuser de l'air chaud en amont de la source d'air chaud.

A cet effet, les perforations 20 peuvent être ménagées respectivement sur les faces supérieure 12 et inférieure 13 du bec 11 et sur la face latérale 15 dirigée vers les moyens de pressage 4.

Ces perforations sont de préférence de forme oblongue.

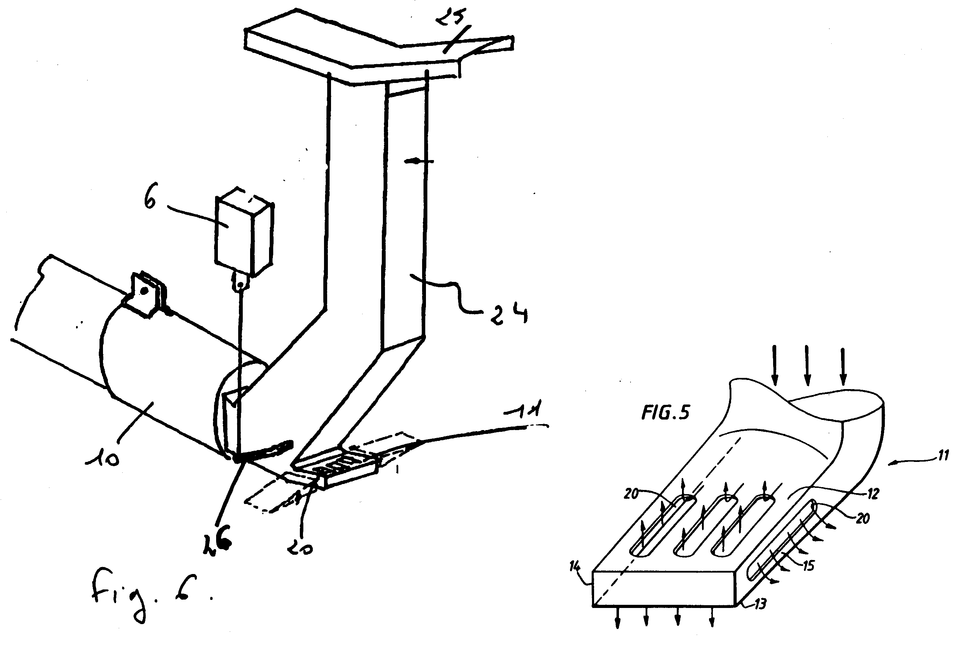

Pour plus de clarté, on a représenté par des flèches (figure 5) les différentes directions de propagation de l'air chaud au niveau du bec 11.

Enfin, pour avoir une meilleure répartition de l'air chaud à projeter, la buse 3 comporte des ailettes de déflexion 21 montées à l'intérieur de la buse 3 au niveau de la jonction 22 entre la base 9 de la buse 3 et le conduit d'amenée 10 d'air chaud.

## Revendications

1. Machine de thermosoudage à air chaud d'au moins deux pièces (2a, 2b) planes en matériau thermosoudable, comportant : une source de chaleur (3) destinée à envoyer de l'air chaud suivant un axe de projection (3a), en un point prédéterminé des pièces ; des moyens de pressage (4) des pièces l'une contre l'autre, la source de chaleur (3) étant placée en amont des moyens de pressage (4) ; des moyens d'entraînement (23) et des moyens de guidage (5) des pièces (2a, 2b) suivant un axe (5a) et un sens de guidage (5b) dirigé vers la source de chaleur (3), les pièces (2a, 2b) étant guidées en regard et distantes l'une de l'autre, pour qu'à leur passage au niveau de la source de chaleur (3), cette dernière soit située entre les deux pièces (2a, 2b), en regard ; la source de chaleur (3) comportant une buse destinée à envoyer à travers des perforations (20) de l'air chaud suivant l'axe de projection (3a) ; une base (9) de la buse (3) étant en communication avec un conduit (10) d'amenée d'air chaud, et un bec (11) d'un seul tenant avec la base (9), qui permet la projection d'air chaud reçu du conduit (10) dans une direction souhaitée suivant l'axe de projection ; caractérisée en ce que le bec (11) comporte des perforations sur des faces inférieures (13) et supérieure (12), tandis que la buse (3) comporte un clapet (19) de détermination de la quantité de chaleur fournie en fonction du matériau des pièces, ménagé sur une face supérieure (18) de la base (9) et dont la fermeture ou l'ouverture provoque l'évacuation de l'air chaud dans une direction d'évacuation différente de la direction souhaitée ; la machine comportant un dispositif de commande (6) destiné à commander par intermittence l'état de chauffe de la source de chaleur (3) en fonction d'un signal envoyé par au moins un détecteur de position (7) de passage des pièces (2a, 2b) en un point prédéterminé et à transmettre une information correspondante au dispositif de commande (6), l'ouverture ou la fermeture du clapet (19) de la buse (3) étant commandées par le dispositif de commande (6) en fonction de l'information reçue du détecteur (7) ; tandis qu'un dispositif de gestion (8) détermine la quantité de chaleur fournie par la source de chaleur (3) et la vitesse d'entraînement des pièces (2a, 2b) par les moyens (23) en fonction de la nature de leur matériau.

2. Machine de thermosoudage selon la revendication 1, caractérisée en ce que l'axe de projection (3a) est sensiblement perpendiculaire à l'axe de guidage (5a).

3. Machine selon la revendication 1 ou 2, caractérisée en ce que les moyens de guidage (5) sont destinés à recevoir des pièces planes, notamment des feuilles (2a, 2b), de différentes épaisseurs.

4. Machine selon l'une des revendications 1 à 3, caractérisée en ce que le bec (11) de la buse a une forme parallélépipédique dont la section transversale est sensiblement rectangulaire et délimitée par les face supérieure (12), inférieure (13) et deux faces latérales (14, 15).

5. Machine selon la revendication 4, caractérisée en ce que la buse comporte au moins une perforation (20) de diffusion d'air chaud ménagée sur chaque face (12, 13, 14, 15) du bec (11).

6. Machine selon la revendication 4 ou 5, caractérisée en ce que la base (9) de la buse présente une section droite décroissante en direction du bec (11) délimitée par une face inférieure (17) définissant un plan (17a) incliné par rapport à celui défini par les pièces à thermosouder (2a, 2b), et sa face supérieure (18) inclinée vers le bas en direction du bec (11).

7. Machine selon la revendication 6, caractérisée en ce que le bec (11) de la buse est incliné par rapport au plan (7a) défini par la face inférieure (17) de la base (9).

8. Machine selon l'une des revendications 1 à 7, caractérisée en ce que la buse comporte des ailettes de déflexion (21) montées à l'intérieur, au niveau de la jonction (22) entre la base (9) et le conduit (10) d'amenée d'air chaud et permettant une meilleure répartition de l'air chaud à projeter.

## Claims

1. A hot air heat welding machine for at least two plane parts (2a, 2b) of heat fusible material, comprising: a heat source (3) designed for sending hot air along a projection axis (3a), to a pre-set point on the parts ; means (4) for pressing the parts against one another, whereas the heat source (3) is located upstream of the pressing means (4); driving means (23) and guiding means (5) for the parts (2a, 2b) along an axis (5a) and a guiding direction (5b) turned towards the heat source (3), whereby the parts (2a, 2b) are guided opposite to one another and at a distance from one another, so that when they pass the heat source (3), the heat source is located between both parts (2a, 2b) facing one another; whereas the heat source (3) comprises a nozzle designed for sending hot air through perforations (20) along the projection axis (3a); whereas a base (9) of the nozzle (3) communicates with a hot air supply duct (10) and a spout (11) cast with the base (9), which enables projecting the hot air received from the duct (10) into a requested direction, along the projection axis; characterised in that the spout (11) comprises perforations on its lower (13) and upper (12) faces, whereas the nozzle (3) comprises a valve (19) to determine the quantity of heat supplied in relation to the material of the parts, provided on one upper face (18) of the base (9) and whose closing or opening causes hot air to be evacuated into an evacuation direction differing from the requested direction; whereas the machine comprises a control device (6) designed for intermittent temperature control of the heat source (3) in relation to a signal sent by at least one position sensor (7) which detects the passage of the parts (2a, 2b) through a pre-set point and for transmitting a corresponding piece of information to the control device (6), whereby the opening or closing of the valve (19) of the nozzle (3) are actuated by the control device (6) in relation to the information received from the sensor (7); while a management device (8) determines the quantity of heat supplied by the heat source (3) and the driving speed of the parts (2a, 2b) by the means (23) in relation to the nature of their material.

2. A heat-welding machine according to claim 1, characterised in that the projection axis (3a) is more or less perpendicular to the guiding axis (5a).

3. A machine according to claim 1 or 2, characterised in that the guiding means (5) are designed for receiving plane parts, notably sheets (2a, 2b) of different thicknesses.

4. A machine according to one of the claims 1 to 3, characterised in that the spout (11) of the nozzle has the form of a parallelepiped whose cross section is more or less rectangular and delineated by the upper (12), lower (13) faces and both lateral faces (14, 15).

5. A machine according to claim 4, characterised in that the nozzle comprises at least one hot air diffusion perforation (20) provided on each face (12, 13, 14, 15) of the spout (11).

6. A machine according to claim 4 or 5, characterised in that the base (9) of the nozzle exhibits a straight section decreasing towards the spout (11), delineated by a lower face (17) defining a tilted plane (17a) in relation to that defined by the parts to be heat fused (2a, 2b) and its upper face (18) which is tilted downwards, towards the spout (11).

7. A machine according to claim 6, characterised in that the spout (11) of the nozzle is tilted in relation to the plane (7a) defined by the lower face (17) of the base (9).

8. A machine according to one of the claims 1 to 7, characterised in that the nozzle comprises deflection fins (21) mounted internally, at the junction (22) between the base (9) and the hot air supply duct (10) and enabling better distribution of the hot air to be projected.

## Patentansprüche

1. Heissluft-Wärmeverschweissungsmachine von mindestens zwei flächigen Teilen (2a, 2b) aus wärmeverschweissbarem Werkstoff, mit : einer Wärmequelle (3) zum Versenden von Heissluft nach einer Projektionsachse (3a) auf einen vorgegebenen Punkt der Teile ; Mitteln (4) zum Gegeneinanderpressen der Teile, wobei die Wärmequelle (3) den Pressmitteln (4) vorgelagert ist ; Mitnahmemitteln (23) und Führungsmitteln (5) der Teile (2a, 2b) nach einer Achse (5a) und einer auf die Wärmequelle (3) gerichteten Führungsrichtung (5b), wobei die Teile (2a, 2b) gegenüberliegend und in einem Abstand zueinander geführt werden, damit sich die Wärmequelle (3) zwischen den beiden sich gegenüberliegenden Teilen (2a, 2b) bei ihrem Vorbeilaufen an der Wärmequelle (3) befindet ; wobei die Wärmequelle (3) eine Düse aufweist, um durch Löcher (20) Heissluft nach der Projektionsachse (3a) zu versenden ; einer Basis (9) der Düse (3), die mit einer Heissluftversorgungsleitung (10) in Verbindung steht, und einem mit der Basis (9) ein Teil bildenden Schnabel (11), der die Projektion der aus der Leitung (10) kommenden Heissluft in einer gewünschten Richtung nach der Projektionsachse ermöglicht ; dadurch gekennzeichnet, dass der Schnabel (11) an der unteren (13) und der oberen (12) Seite Löcher aufweist, während die Düse (3) eine Klappe (19) zur Ermittlung der entsprechend dem Werkstoff der Teile gelieferten Wärmemenge umfasst, die an einer oberen Seite (18) der Basis (9) vorgesehen ist, und deren Schliessen bzw. Öffnen die Abführung der Heissluft in eine andere Abführungsrichtung als die gewünschte Richtung verursacht ; wobei die Maschine eine Steuervorrichtung (6) umfasst, um im Aussetzbetrieb den Heizzustand der Wärmequelle (3) zu steuern, entsprechend einem von mindestens einem Positionsdetektor (7) des Vorbeilaufens der Teile (2a, 2b) an einem vorgegebenen Punkt gesendeten Signal, der ebenfalls eine entsprechende Information an die Steuervorrichtung (6) überträgt, wobei das Öffnen und Schliessen der Klappe (19) der Düse (3) von der Steuervorrichtung (6) entsprechend der vom Detektor (7) erhaltenen Information gesteuert werden während eine Verwaltungsvorrichtung (8) die von der Wärmequelle (3) gelieferte Wärmemenge und die Mitnahmegeschwindingkeit der Teile (2a, 2b) durch die Mittel (23) entsprechend der Beschaffenheit ihres Werkstoffes ermittelt.

2. Wärmeverschweissungsmaschine nach Anspruch 1, dadurch gekennzeichnet, dass die Projektionsachse (3a) etwa lotrecht zur Führungsachse (5a) verläuft.

3. Maschine nach Anspruch 1 oder 2, dadurch gekennzeichnet, dass die Führungsmittel (5) dazu bestimmt sind, flächige Teile, insbesondere Bögen (2a, 2b), verschiedener Dicken zu empfangen.

4. Maschine nach einem der Ansprüche 1 bis 3, dadurch gekennzeichnet, dass der Schnabel (11) der Düse eine Quaderform aufweist, deren Querschnitt etwa rechteckig ist und die von der oberen Seite (12), der unteren Seite (13) und zwei Seitenflächen (14, 15) abgegrenzt wird.

5. Maschine nach Anspruch 4, dadurch gekennzeichnet, dass die Düse mindestens ein Loch (20) für die Verteilung der Heissluft aufweist, das an jeder Seite (12, 13, 14, 15) des Schnabels (11) vorgesehen ist.

6. Maschine nach Anspruch 4 oder 5, dadurch gekennzeichnet, dass die Basis (9) der Düse einen geraden, sich in Richtung des Schnabels (11) verjüngenden Abschnitt aufweist, der von einer unteren Seite (17), die eine in Bezug auf die von den zu verschweissenden Teilen (2a, 2b) definierte Ebene eine geneigte Ebene (17a) definiert, und seiner oberen, nach unten zum Schnabel (11) hin gerichteten Seite (18) abgegrenzt wird.

7. Maschine nach Anspruch 6, dadurch gekennzeichnet, dass der Schnabel (11) der Düse in Bezug auf die von der unteren Seite (17) der Basis (9) definierte Ebene (7a) geneigt ist.

8. Maschine nach einem der Ansprüche 1 bis 7, dadurch gekennzeichnet, dass die Düse Ablenkungsflügel (21) umfasst, die im Inneren, an der Kreuzung (22) zwischen der Basis (9) und der Heissluftversorgungsleitung (10) montiert sind, und eine bessere Verteilung der zu projizierenden Heissluft ermöglichen.
